# EUROPEAN PATENT APPLICATION

(11) **EP 4 524 802 A2**
(43) Date of publication of application: **19.03.2025**
(21) Application number: 24221799.0
(22) Date of filing: 13.01.2023
(51) Int. Cl.: G06F 30/00

(54) **ADDING DETAILS TO A MODEL IN COMPUTER AIDED MODELING**

(30) Priority: 14.01.2022 FI 20220003
(62) Divisional of application: 23151559.4
(71) Applicant: Trimble Solutions Corporation, 02600 Espoo (FI)
(72) Inventor: PITKÄNEN, Henri, 02600 Espoo (FI); SHPYNDA, Vadym, 02600 Espoo (FI); FILOCHE, Pascal, 02600 Espoo (FI); NIEMINEN, Lassi, 02600 Espoo (FI)
(74) Representative: Bryn-Jacobsen, Caelia

(57) **Abstract**

Mechanisms to increase level of detail in sets of model objects in a model for a construction product are disclosed, the mechanism utilizing a collection comprising a plurality of collection sets with details in metadata. For example, to increase (203) level of detail in a set of model objects, content of a first metadata is determined (205). The first metadata comprises information indicating at least a type and geometry of the set of model objects. The collection sets are sorted (206) to a suitability order based on compatibility of the first metadata to metadata of the collection sets. If the most suitable collection set is approved, the level of detail of the set of model objects is increased (210) by adding to the first metadata copies of one or more details in the metadata of the most suitable collection set.

## Description

### TECHNICAL FIELD

Various examples relate to computer aided modeling of construction products.

### BACKGROUND

The development of data processing systems, computer and computer applications has transformed different processes into computerized processes. For example, different computer modeling applications for creating digital representations of different structures, like buildings, or other construction products, provide tools to architects and engineers to create a complete representation of a final construction product to be fabricated. The complete representation should minimize material usage, for example for sustainability reasons, and yet to satisfy building codes relating for example load bearing, while time reserved for detail modeling is usually rather short. Even though different automated connection mechanisms, for example such as disclosed in US 7,617,076 US 7,765,240, and US 8,041,744, are included to be part of the computer modeling applications to create automatically connections, or other details, based on received user inputs, there is a need for a mechanism that requires less user input.

### SUMMARY

An object of the present invention is to provide a mechanism to utilize already existing details. The object of the invention is achieved by a method, an apparatus, a system, a computer readable medium, and a computer program product which are characterized by what is stated in the independent claims. The preferred embodiments of the invention are disclosed in the dependent claims.

A general aspect of the invention uses earlier modeled details, that are stored to a collection of earlier models, to increase level of detail to set of model objects, thereby shortening time needed and facilitating to achieve the above goals.

### BRIEF DESCRIPTION OF DRAWINGS

Embodiments are described below, by way of example only, with reference to the accompanying drawings, in which
Figure 1 shows a simplified architecture of an example of a system and a schematic block diagram of an apparatus;
Figures 2 to 5 are flow charts illustrating example functionalities;
Figures 6A to 8B illustrate examples of level of detail;
Figures 9 and 10 are flow charts illustrating example functionalities;
Figures 11 to 13 illustrate examples relating to artificial intelligence based tools; and
Figure 14 is a schematic block diagram.

### DETAILED DESCRIPTION OF SOME EMBODIMENTS

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. Further, although terms including ordinal numbers, such as "first", "second", etc., may be used for describing various elements, the structural elements are not restricted by the terms. The terms are used merely for the purpose of distinguishing an element from other elements. For example, a first metadata could be termed a second metadata, and similarly, a second metadata could be also termed a first metadata without departing from the scope of the present disclosure.

The present invention is applicable to any apparatus, system or equipment that is configured or configurable to support computer-aided modeling, and corresponding modeling applications (i.e. modeling programs), or any other system/applications configured or configurable to create and/or to manipulate digital representations of real-world articles and/or related documentations, like engineering drawings. Examples of such applications are computer aided design applications and computer aided modeling applications, such as different Building Information Modeling (BIM) applications. Current BIM applications are used to plan, design, construct, operate and maintain diverse construction products (physical structures), such as different buildings, roads, bridges, ports, tunnels, etc.

Various programming techniques, storage of data in memory and manners of modeling real world articles and implementing databases develop constantly. This may require extra changes in the invention. Consequently, all terms and expressions should be interpreted broadly, and they are intended to describe, not to restrict, the invention.

A model (digital model) of a construction product, such as a building, may comprise one or more separate sub-models, for example an architecture model and an engineering model that can be processed as if they were individual models, Hence, herein term model covers a separate sub-model as well as any combination of sub-models. A model in turn comprises one or more model objects that represent pieces (articles) forming the modeled construction product in real-world, and/or used during fabrication of the modeled construction product. Since a piece, for example an engineering drawing of a floor, may itself comprise further pieces, like detailed drawings on columns, a term "set of model objects" is used herein to cover the wide variety of pieces, a non-limiting list of pieces including single pieces/items/elements, combinations of two or more pieces, one or more structures forming a further structure, one or more connections with their pieces, and one or more technical documents. A non-limiting list of different pieces include a bolt, an embed, a part, a weld, a reinforcement splice, an assembly, a sub-assembly, reinforcing and drawings. Hence, a set of model objects may comprise any number of model objects starting with one model object, and a set of model objects may comprise any number of sets of model objects, starting with zero.

Modeling a construction product progresses from concept to precise definition at different rates, so at any given time different sets of model objects may be at different points along this progression. During modeling different definitions, including geometrical properties, location, connecting sets of model objects, technical document definitions, and other characteristics are added to details of the sets of model objects, when the modeling progresses from an approximate model to a fabrication ready model. The approximate model may be a symbol with approximate space reservation for a generic type. The fabrication ready set of model objects contains accurate details enabling a fabrication of a corresponding piece. In other words, during modeling the level of detail is increasing, the level of detail being essentially how much detail is included in the set of model objects. Adding one new detail increases the level of detail, but one may add a plurality of details to increase level of detail. It should be appreciated that the level of detail is not a synonym to level of development, as defined in "Level Of Development (LOD) Specification For Building Information Models, Part 1", published in December 2021 by BIM Forum. The specification is a reference that enables practitioners in the AEC Industry (architecture, engineering, and construction industry) to specify and articulate with a high degree of clarity the content and reliability of Building Information Models (BIMs) at various stages in the design and construction process. Naturally the level of detail of a set of model objects may be mapped against the content requirements to see what level of development requirements are met. Level of detail may also be called level of design.

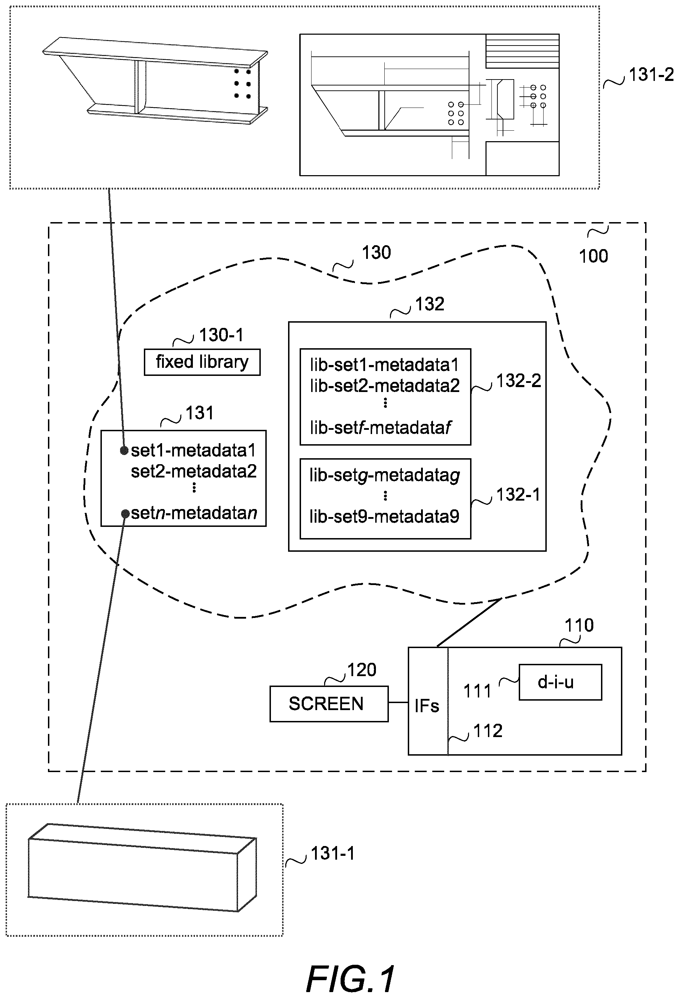

Figure 1 illustrates a simplified modeling system describing only some logical units with their operative connections, the implementation of which may deviate from what is presented. It is obvious to a person skilled in the art that the system may also comprise other functions and structures that need not be described in greater detail here. The more detailed structure of the system is irrelevant to the actual invention.

The modeling system 100 illustrated in Figure 1 comprises one or more apparatuses 110 (one is shown in Figure 1) that are connectable to one or more data storages 130 (one is shown in Figure 1) that comprise at least a model (131) and a collection, 132, which is a kind of a library. In the illustrated example of Figure 1, the one or more data storages 130 comprise also another library (second library) 130-1, called herein a fixed library.

The apparatus 110 may be any computing device that can be configured to perform at least part of the functionalities described below. For that purpose, or at least for increasing level of detail of one or more sets of model objects using a collection instead of user inputs adding details to the one or more sets of model objects, the apparatus 110 comprises a unit 112, called herein a detail increasing unit (d-i-u) 111. The detail increasing unit 111 may be part of a modeling application, or an add-in or a plug-in to the modeling application. The apparatus 110 further comprises different interfaces (IFs) 112. One or more of the interfaces 112 may be a user interface, for example an interface for a keyboard, or an interface to a display screen 120. The user may, depending on modeling application in use, create a model, modify a model, study it, output (display, print) desired technical documents, such as the engineering drawings, and/or reports of the model, view the model, input information, including different selections, etc. by using the user interface(s) and interfaced devices. One of the interfaces 112 may be an interface towards the data storage 130, to retrieve one or more models 131 and/or to publish (store) one or more models 131 and to have access to the collection 132, or at least to a part of the collection 132. A non-limiting list of examples of apparatuses 110 includes a user terminal or a workstation, such as a laptop, a smartphone, a personal computer, a tablet computer, a field device, a virtual reality device, augmented reality (AR) interface device, a web client, or a server, like a cloud server or a grid server.

The fixed library 130-1 in the data storage 130 is part of the modeling application, and contains definitions to create automatically connections, or other details, as is known in the art, based on received user inputs and content in the fixed library, for example pre-defined parametrized connections, implemented as mathematical functions, following exact rules, and adapting to model content. The fixed library may be called a product library, a catalog, a product catalog library, a connection library, a part library, a system defined library, library comprising hardcoded pieces, a prior art library etc. Examples of fixed libraries are described in US 7,617,076, US 7,765,240 and US 8,041,744, for example.

The data storage 130 stores, for a model 131 for a construction product, different sets of model objects associated with corresponding metadata. Metadata content depends on the level of detail of a set of model objects. The metadata may contain mere information indicating a type and geometry (initial geometry) of the set of model objects, for example a column with approximate height x and cross section y*z, for example as illustrated by 131-1 in Figure 1. The set of model objects 131-1 is an example of an approximate model. On the other hand, the metadata may contain details that are fabrication level of detail, for example the details may comprise profile definitions and material definitions per a piece belonging to the set and technical document definitions, for example different drawings, as illustrated by 131-2. If the user has, during the modeling, used the content in the collection 130-1, the definitions in the metadata contain reference(s), or corresponding information, to the content used, i.e. it is part of the definitions of the model. For example, if a user has selected two beams, and used the fixed library 130-1 to create a connection based on a connection in the fixed library, the connection, or the connection rule, e.g. add bolts, being selected by the user, a reference to the connection will become part of the metadata. Naturally, other information, for example history data, may be stored for the digital model and/or in the metadata. The model, i.e. the sets of model objects with corresponding metadata may be stored in the data storage 130 as shared data.

The modeling system comprises the collection 132, which can be seen to be another type of library than the fixed library 130-1. The collection 132 is used for increasing the level of detail. The content in the collection 132 is not hard-coded content, or created by the modeling application provider, the content is created by users of the modeling application while they are modeling. The collection 132 could be called a flexible library, a cluster collection, a collection of clusters, a collection of modeled pieces, a digital warehouse of modeled pieces, or simply a digital warehouse, or a user generated collection, or a user generated library, or external library, or additional library, or simply a library. However, herein the mere term "collection" is used. It should be appreciated that the collection 132 may be created, maintained, organized and updated separately from modeling, and any known or future ways to create, maintain, organize and update a collection 132 may be used. In the illustrated example of Figure 1, the collection 132 comprises sub-collections, 132-1, 132-2, or clusters, or sub-libraries. The collection comprises sets of model objects, called herein collection sets for the sake of clarity so that they are not mixed with sets of model objects in the model, with corresponding metadata. In other words, the collection content is separate from the model content, and from the fixed library. Depending on an implementation, the collection content may be created and updated using the model content. For example, a classic five-story building may have over 500 columns and beams, and once a set of model objects achieves the level of detail required for a collection set, it may be stored to the collection. In other implementations, the collection content may be based on a plurality of models (including or not including the model currently being processed). The level of detail required for a collection set may vary, depending on an implementation. There are implementations in which the purpose of increasing a level of detail is to step by step to progress towards a fabrication ready model for a piece or pieces. For example, it is possible that there are sub-collections comprising sets having fabrication level of detail and sub-collections comprising engineering level of detail. However, in an implementation, the sets in the collection have the fabrication level of detail, and the increase of level of detail results to a fabrication ready model for a piece or pieces. For example, a collection set "lib-set1-metadata1" in the sub-collection 132-2 may be a copy of the set of objects "set1-metadata1" in the model 131, illustrated by 131-2. This ensures that automatic detailing, which uses the collection, always creates sets of model objects not necessarily requiring any further detailing. However, the flexibility of the collection 132 allows a set with any detail to be stored to the collection 132, as will be described below. In other words, in some implementations users may freely add content to the collection 132, but there may be implementations in which a specific level of detail may be required for content to be stored to the collection. It should be appreciated that in implementations in which the history data is part of metadata of model objects, it may or may not be part of the metadata of collection sets created using said metadata of model objects. A collection set may be called a cluster set, a set in a cluster, a digital warehouse set, a user generated set, a library set, etc.

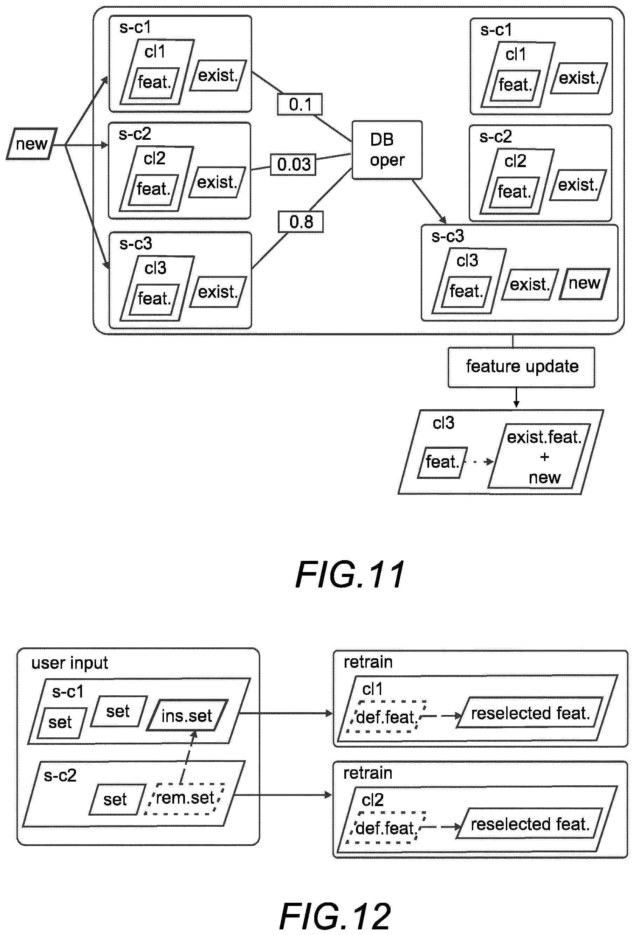

In implementations using sub-collections, or clusters, collection sets may be allocated to different sub-collections (clusters) based on sub-collection features (cluster features), using any known or future method, for example as disclosed with Figure 11. Further, a sub-collection may comprise sub-collections, or clusters or sub-clusters. For example, a sub-collection may be project-based sub-collection, there may be a sub-collection for steel beams, or for steel beams of floor 4, or for steel beams of specific profile or load bearing capabilities, or steel beams with engineering level of detail, or steel beams with fabrication level of detail, or any combination thereof, just to give some non-limiting examples. The collection having sub-collections, and/or a sub-collection having sub-collections, may be organized hierarchically, for example to have a tree structure, with different levels of hierarchy, for example with different granularity of the level detail. Further, artificial intelligence tools to organize the collections/sub-collections may be used, for example as disclosed with Figures 11 to 13. In other words, any kind of allocation method may be used and there are no restrictions on what and how to allocate collection sets to sub-collections in case sub-collections are implemented.

In an implementation, a sub-collection or sub-collections may be associated with access rights/with different access rights. For example, access rights may be project-specific and/or role-specific and/or fabricator-specific, or sub-contractor specific. It should be appreciated that any known or future method relating to access rights may be used.

The data storage 130 may be any kind of conventional or future data repository, including distributed and centralized storing of data, managed by any suitable management system forming part of the modeling system (modeling environment). An example of distributed storing includes a cloud-based storage in a cloud environment (which may be a public cloud, a community cloud, a private cloud, or a hybrid cloud, for example). Cloud storage services may be accessed through a co-located cloud computer service, a web service application programming interface (API) or by applications that utilize API, such as cloud desktop storage, a cloud storage gateway or Web-based content management systems. Further, the modeling system 100 may comprise several servers with databases, which may be integrated to be visible to the user (user apparatus) as one database and one database server. However, the implementation of the data storage, the manner how data is stored, retrieved, accessed and updated, etc. are irrelevant to the invention, and hence there is no need to describe them in more detail herein.

In the following different example functionalities of a computing device, for example a user apparatus, are described without describing steps relating to connection establishment(s) to data storages to retrieve or store data, and using the examples of set(s) of objects with metadata with different level of detail illustrated in Figures 1, 6A, 6B, 7A, 7B, 8A and 8B. Further, it is assumed that the modeling application is running in the computing device, the modeling application, and hence the computing device, containing the detail increasing unit. A further assumption made herein, for the sake of description is, that a user input requesting to increase level of detail results that the level of detail is increased. It should be appreciated that, even though not illustrated below, a user input ending the process or canceling the request may be received at any time, in which case the level of detail is not increased.

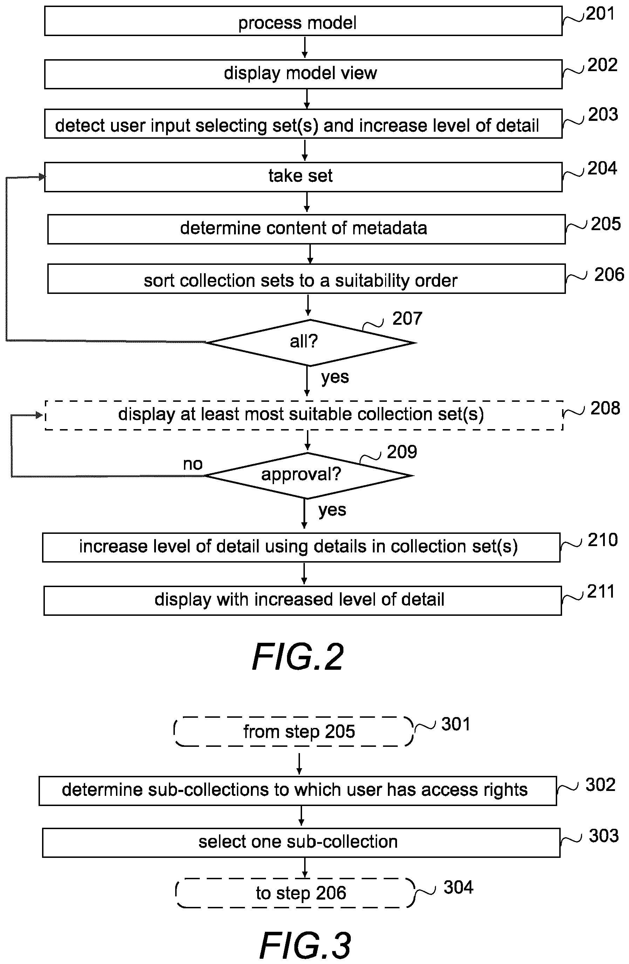

Figure 2 illustrates an example of a functionality of the computing device, which is processing (step 201), by the modeling application running in the computing device, a model for a construction product and displaying (step 202) a model view. The model comprises at least a plurality of sets of model objects, wherein a set of model objects represents one or more pieces belonging to the construction product that is to be fabricated. The displayed model view renders at least some of the plurality of sets of model objects.

In the example of Figure 2, when a user input requesting to increase level of detail relating to at least one set of the plurality of sets of model objects, said at least one set of model objects being selected by a user, is detected in step 203, one of the sets of model objects selected is taken in step 204 to be processed.

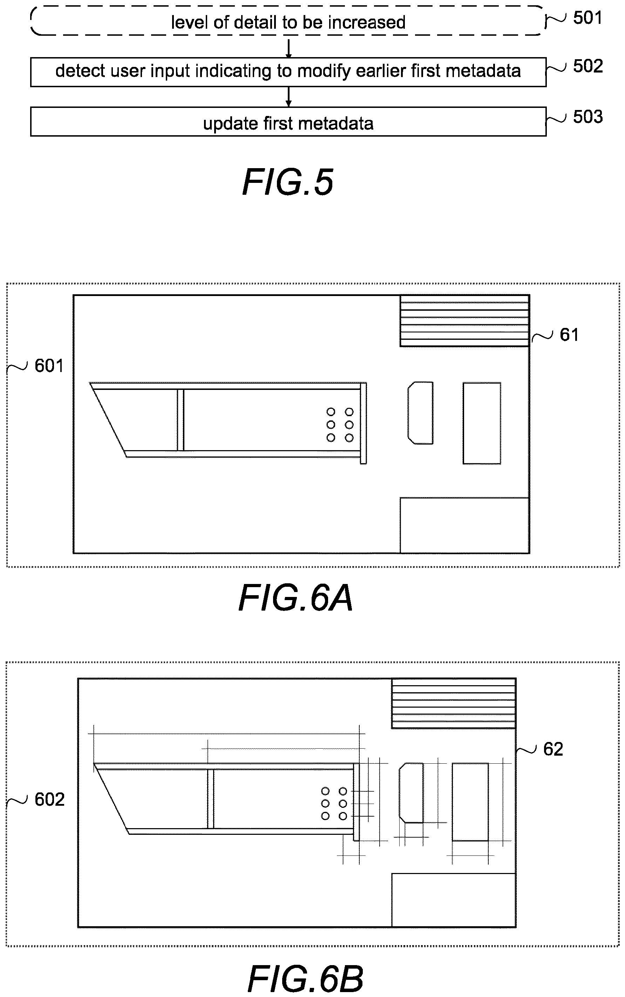

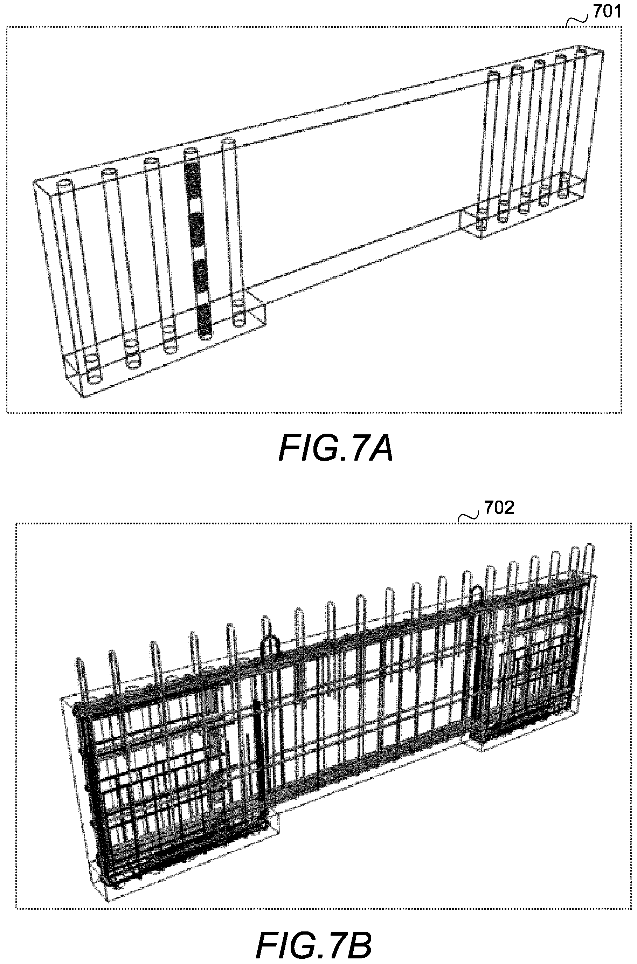

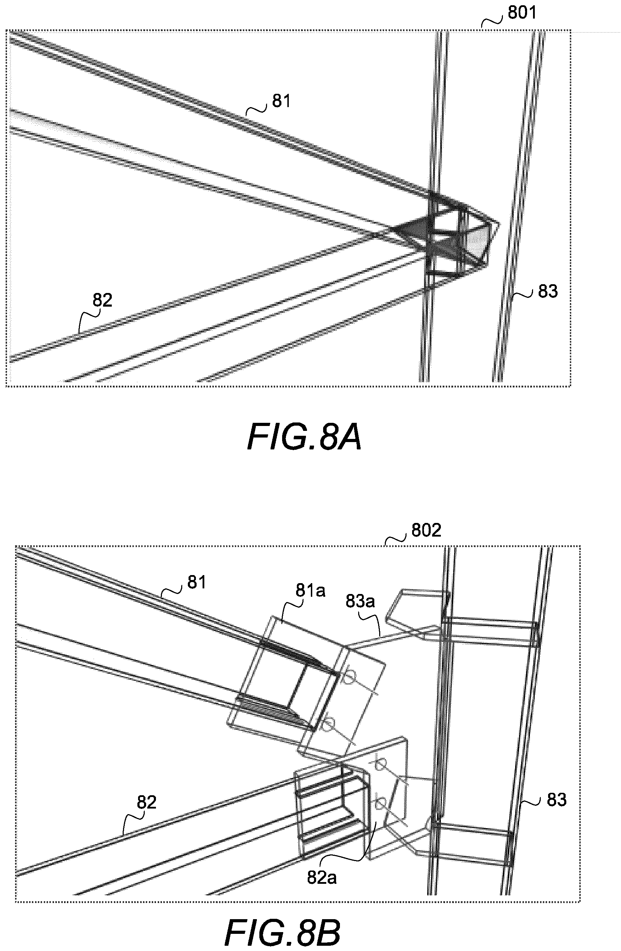

Then the content of a metadata (first metadata) of the set of model objects is determined in step 205. The content depends on the level of detail of the set of model objects, but the metadata (the first metadata) comprises information indicating at least a type and geometry of the set of model objects. For example, the metadata (first metadata) may contain details defining the set of model objects as displayed by 131-1 in Figure 1, or as displayed by 701 in Figure 7A or by 801 in Figure 8A. Figure 8A displays three sets of model objects, sets being 81, 82, 83.A further example of details in the first metadata may contain details defining a drawing, as displayed by 61 in a set of model objects 601 in Figure 6A and by 62 in a set of model objects 602 in Figure 6B. Then, using the first metadata, collection sets in the collection are sorted in step 206 to a suitability order, based on compatibility of the first metadata to metadata of the collection sets. Then, in the illustrated example, it is checked in step 207, whether all sets of model objects the user has selected in step 203 have undergone the process of steps 205 and 206. If not (step 207: no), the process returns to step 204 to take a set to be processed. Naturally, in another example, the processes of steps 205 and 206 may be performed parallel, per a set of model objects selected.

In the illustrated example, when all selected sets of model objects have undergone the process of steps 205 and 206 (step 207: yes), at least the most suitable collection set, per a set of model objects selected, is displayed in step 208 to the user. The most suitable collection set (or sets) may be displayed by displaying the name of the collection set, or a snapshot of the collection set, for example. For example, assuming that the set of model objects selected is the one illustrated by 131-1 in Figure 1, and the collection contains as collection sets illustrated by 131-2 in Figure 1, by 702 in Figure 7B and by 802 in Figure 8B, the most suitable one, i.e. the collection set 131-2 is displayed. In another example, the displaying is performed for a set of model objects selected after step 206, once the collection sets are in the suitability order. However, if the request to increase the level of detail included to perform the increasing of the level of detail as a background process, the step 208 is omitted.

In the illustrated example it is assumed that the displaying is continued (step 209: no) until a user input indicating approval of the most suitable collection set(s) is received (step 209: yes) after which level of detail of the set(s) of model objects is increased in step 210 by adding to the first metadata copies of one or more details in the metadata of the most suitable collection set. More precisely, if the first metadata does not comprise a detail, then the detail is copied. For example, if the metadata has an approximate of the geometry, details providing more accurate geometry are added. Depending on an implementation and/or user input, a detail, for example a definition or a value, already existing in the first metadata, i.e. being part of the content determined in step 205, may be kept as it is, or modified. Then in the illustrated example, the set(s) of model objects with increased level of detail are displayed in step 211 to the user.

Increasing a level of detail as described above provides a guided human-machine interaction process that assists a user, for example an engineer, to create a complete model, or a complete part of a model, by means of which the construction product can be manufactured.

If the request to increase level of detail is a request to perform the increasing of the level of detail as a background process, the request also comprises a user input indicating approval of the most suitable collection set(s), and hence the approval is received already in step 203. For example, a request to increase the level of detail as a background process may be "add needed annotations to drawings". For example, if the set of model objects 601 of Figure 6A with the first metadata comprising details for a drawing as displayed by 61 has been selected in step 203, without any further user interaction, after step 210 (increasing the level of detail) the set of model object may correspond to the set of model objects 602 of Figure 6B, with metadata comprising also annotation details for the drawing, as displayed by 62.

It should be appreciated that displaying at least the most suitable collection set(s) in step 208 may be stopped in response to any other user input. Further, it should be appreciated that in another example, the displaying with increased level of detail may be performed in response to user input requesting it.

In the example of Figure 2, it was assumed that the collection had no sub-collections. Figure 3 illustrates an example how the process may be modified if the collection has a plurality of sub-collections with access rights, and the plurality of collection sets are allocated to said sub-collections based on their metadata and features of sub-collections.

In the illustrated example of Figure 3, it is assumed that the process described happens between step 205 (step 301 in Figure 3) and step 206 (step 304 in Figure 3) in the example of Figure 2, i.e. it is performed per a set of model objects selected.

Referring to Figure 3, after the content of the first metadata has been determined (step 301), sub-collections to which the user has access rights amongst sub-collections in the collection are determined in step 302. Any known or future method to determine user's access rights, for example single sign on, can be used in step 302, the details of determining access rights being known by a person skilled in the art, and hence there is no need to describe them in more detail herein.

Then one sub-collection amongst sub-collections the user has access rights is selected in step 303 based on the first metadata and the features of the sub-collections determined in step 301. Then the process continues (step 304) to step 206 in Figure 2 to sort collection sets in the selected sub-collection to the suitability order.

In another example, step 302 may be performed after step 203 in Figure 2, i.e. not per a set of model objects selected, and then step 303 is performed between steps 205 and 206 in Figure 2.

If the sub-collections are implemented without access rights, step 302 may be omitted and step 303 is performed amongst all sub-collections.

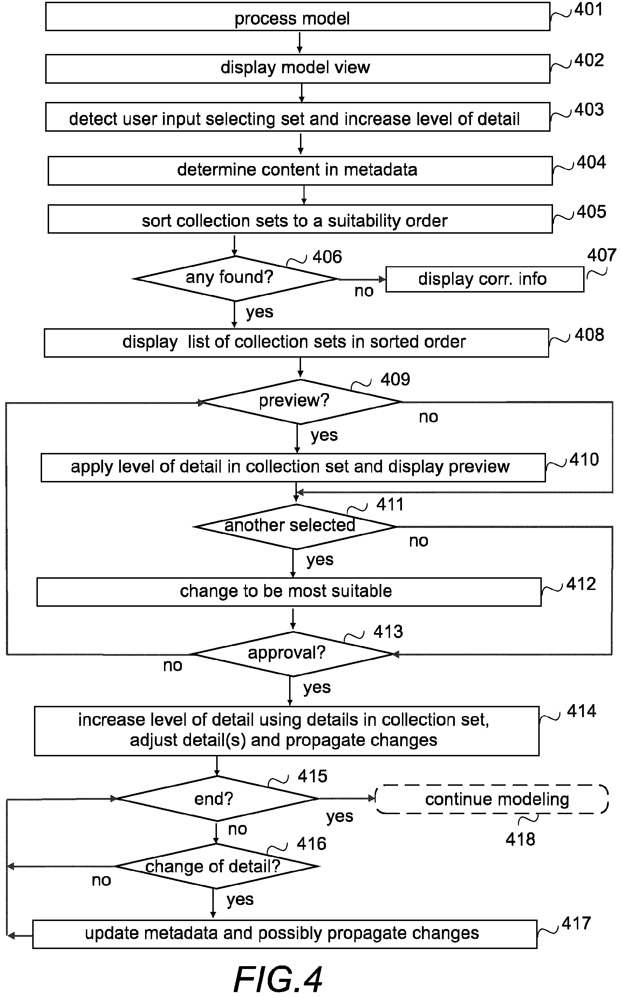

Figure 4 illustrates another example of a functionality of the computing device, which is processing (step 401), by the modeling application running in the computing device, a model for a construction product and displaying (step 402) a model view. The model comprises at least a plurality of sets of model objects, wherein a set of model objects represents one or more pieces belonging to the construction product. The displayed model view renders at least some of the plurality of sets of model objects.

Steps 403 to 405 correspond to steps 203 to 206 or related steps described with Figure 2, with or without steps of Figure 3, and hence are not described in detail herein. Shortly, when a user input requesting to increase level of detail relating to one or more sets of the plurality of sets of model is detected (step 403), content of a metadata (first metadata) is determined (step 404) and, using the first metadata, collection sets in the collection are sorted in step (step 405) to a suitability order.

In the example of Figure 4, it may be that when the collection sets are sorted to a suitability order, no suitable collection set is found (step 406: no), and hence corresponding information is displayed in step 407. The corresponding information may be "not possible to increase the level of detail using collection" or "you have to define details yourself", for example.

If one or more suitable collection sets are found (step 406: yes), in the illustrated example, a list comprising the collection sets in the sorted order (suitability order) is displayed in step 408, and then different user inputs are monitored. In the illustrated example it is assumed that the process increases the level of detail to have a concise example. However, it should be appreciated that the process may as well end without increasing the level of detail.

If a user input requesting a preview is received (step 409: yes), applying metadata of the most suitable collection set to the set of model objects and displaying a result of the applying as the preview is performed in step 410. For example, if the set of model objects selected is the one illustrated by 701 in Figure 7A, the preview may be what is illustrated by 702 in Figure 7B. However, creating a preview does not yet increase the level of detail of the set of model objects selected. Then monitoring of user inputs continues.

If a user input selecting another collection set in the list is detected (step 411: yes), the collection set selected is changed in step 412 to be the most suitable collection set, and then monitoring of user inputs continues. Said user input changing the most suitable collection set may be detected if no user input requesting a preview is received (step 409: no), or after a preview is displayed (step 410). For example, if the set of model objects selected is the one illustrated by 131-1 in Figure 1, and the list contains a collection set corresponding to 131-2 in Figure 1, a collection set corresponding to 602 in Figure 6B (comprising details for drawing 62 displayed), a collection set corresponding to 601 in Figure 6A, and collection set corresponding 702 in Figure 7B in that order, a user input selecting the collection set corresponding 602 in Figure 6B would change it to be the most suitable collection set.

The monitoring of the user inputs of a preview (step 409) and another collection set selected (step 410) is continued (step 413: no) until a user input indicating approval of the most suitable collection set(s) is received (step 413: yes). It should be appreciated that the user input indicating approval may be received without any user input of a preview (step 409: no), or without user input selecting another collection set to be the most suitable collection set (step 411: no).

When the user input indicating approval is received (step 413: yes), detail of the set(s) of model objects is increased in step 414 by adding to the first metadata copies of one or more details in the metadata of the most suitable collection set, as described above with step 210, and adjusting in step 414, when adding detail or details, the added detail(s) to be in accordance with details already existing in the first metadata. For example, using Figures 7A and 7B, when the details added to the set of model objects illustrated by 701 of Figure 7A, add reinforcing, as illustrated in Figure 7B, a height of reinforcing is adjusted to be in accordance of the height already defined in the set of model objects in Figure 7A. In other words, model objects in the model are parametric and able to adapt to such geometrical changes Further in the illustrated example, when the set of model objects to which details are added, is connected to one or more further sets of model objects, changes caused by the increasing the level of detail are propagated in step 414 to the one or more further sets of model objects. It may be that the sets of model objects are connected prior to increasing the level of detail or after increasing the level of detail or both prior and after increasing the level of detail. Further, the sets of model objects may be connected either directly, as is the case in the example illustrated in Figures 8A with the sets of model objects 81, 82, 83 (prior to increasing level of detail), or via one or more connections, as is the case in the example illustrated in Figure 8B, with the sets of model objects 81, 82 and 83. For example, if a user has selected sets depicted by 82 and 83, and the increase of detail causes that details comprise definitions for different pieces, illustrated by 82a, 83a and 81a, of forming a connection (a set of model objects of the connection and/or a reference, or references, to the fixed library), the changes are propagated to the set of model objects illustrated by 81. As can be seen from Figures 8A and 8B, the set of model objects 81 does not any more intersect with the sets of model objects 82 and 83 after increase of level of detail. Further, as can be seen, the automatic increase of level of detail may comprise adding of a plurality of different pieces/parts, and/or a plurality of components, and/or performing a plurality of changes to the geometry, etc., based on the approved collection set, said collection set being one of available collection sets that are based on contents in the collection, accessible to the user. In other words, using the content in the collection, it is possible to create new pieces, connections, etc., to a model, based on the most suitable collection set approved by the user. However, those new pieces created will not become part of collection, or any other library, unless stored to the collection (library).

Then the set(s) of model objects with increased level of detail are displayed to the user, and it is monitored (step 415), whether a user input ending viewing of displayed set(s) of model object is received or a user input changing (step 416) one or more of the details displayed, or in the first metadata after the level of detail has been increased, is received.

If a user input changing one or more details added to the first metadata is received (step 416: yes), the metadata (the first metadata) is updated in step 417 correspondingly, and if the change affects to one or more further sets of details, and/or to a detail in the first metadata, corresponding changes are propagated in step 417. After that the monitoring of user inputs in steps 415 and 416 continues. For example, if the user changes a height of the set of model objects 82, the change may cause changes to 82a and 83a, for example.

When the user input ending viewing of displayed set(s) of model object is received (step 415), modeling is continued in step 418, according to the received user input.

Figure 5 illustrates a functionality of the computing device in implementations, in which a detail, for example a definition or a value, already existing in the first metadata, i.e. being part of the content determined in step 205 in Figure 2 or in step 404 in Figure 4, may be modified while the level of detail is increased. In the illustrated example it is assumed that the functionality is performed within step 210 in Figure 2 or within step 414 in Figure 4.

Referring to Figure 5, while the level of detail is increased, or is to be increased (step 501), and a user input indicating to modify at least a portion of the content of the first metadata is detected in step 502, the first metadata (already existing first metadata) is updated in step 503 by modifying the portion to be in conformity with a corresponding portion in the most suitable collection set. More precisely, said portion may comprise one or more details, and the one or more details in said portion are updated in step 503 to correspond to corresponding one or more details in the metadata of the most suitable collection set. Said modifying may include deleting a detail. The user input indicating to modify at least a portion of the content of the first metadata may be an implicit user input, for example "increase level of detail allowing overriding existing details for technical documents", or "increase level of detail allowing overriding existing details for annotations in drawings".

Assuming that the portion relates to drawing details in the first metadata, and the set of model objects is the one displayed by 131-2 in Figure 1. If the most suitable collection set is the one illustrated in Figure 6A, increasing the level of detail causes that an endplate is added, the drawing details displayed by 61 are updated correspondingly, the updating of the drawing details including deleting some details, and replacing some details with another detail. If the most suitable collection set is the set 602 illustrated in Figure 6B, the drawing details being displayed by 62, it can be seen that no detail is deleted but annotations relating to holes have changed place, due to replacing corresponding details in the first metadata with details in the collection set. In other words, the copies of the one or more details obtained from the collection set may include technical documentation definitions, that comprise one or more annotations.

As can be seen from the above examples, a suitable collection set, for a set of model objects selected by the user, comprises metadata that has at least the same level of detail for the type and the geometry of one or more first pieces represented by the set of model objects selected, and one or more detail increasing the level of detail of the set of model objects selected. By one user input it is possible to add to the model a plurality of different details.

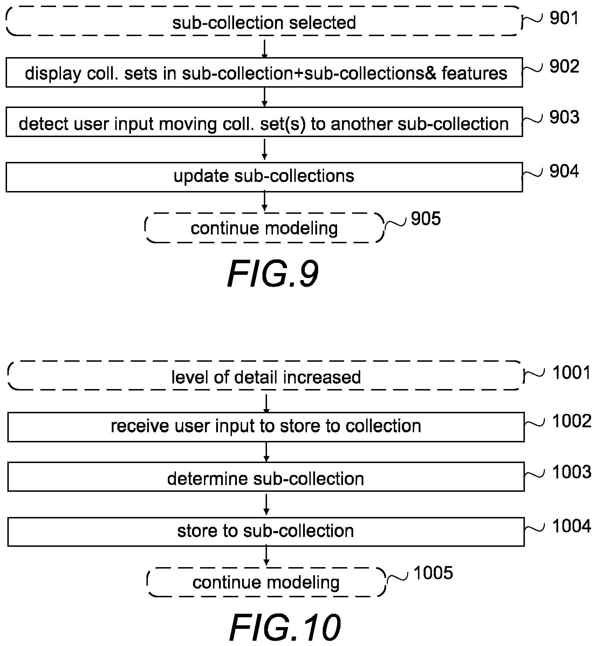

Figures 9 and 10 illustrate examples of functionalities of the computing device in implementations in which the user of the modeling application is allowed to modify the content in the collection, or in one or more sub-collections.

Referring to Figure 9, when a sub-collection has been selected (step 901), either by the user by a corresponding user input or as a result of user input to increase level of detail, the collection sets in said sub-collection and at least one other sub-collection with sub-collection features, or at least with part of the sub-collection features, are displayed in step 902. When a user input moving one or more of the collection sets to one of the at least one other sub-collection is detected in step 903, the sub-collections are updated correspondingly. For example, using the example of Figure 1, if the collection sets in the sub-collection 132-1 are displayed, and sub-collection 132-2 with features (not shown in Figure 1) are displayed, and then a user input selecting lib-set9 and moving lib-set9 to the collection set 132-2 is detected, the sub-collection 132-1 is updated not to comprise lib-set9 with is metadata metadata9 and the sub-collection 132-2 is updated to comprise lib-set9 with is metadata metadata9.

Referring to Figure 10, when level of detail of at least one set of model objects has been increased (step 1001), and a user input storing the at least one set of model objects with increased level of detail is received in step 1002, it is determined in step 1003, based on the features and the first metadata, per a set of model objects of the at least one set of model objects with increased level of detail, a sub-collection whereto allocate the set of model objects. Then the at least one set of model objects, or more precisely its copy, is stored in step 1004 as corresponding at least one collection set to corresponding one or more sub-collections determined in step 1003, and then the modeling continues in step 1005.

If the sub-collections have limited access rights, or limited modification rights, the processes described with Figures 9 and 10 can be performed only if the user has proper access rights allowing the process to be performed.

Further, in the example of Figure 10, the process may comprise ensuring, before storing to the sub-collection, that the level of detail increased, is the same as the level of detail in other collection sets in the sub-collection, and allow storing only if the level of detail increased is the same (or at least the same). By doing so, the use of the collection sets may be used to ensure that the level of detail map to a specific level of development requirements, thereby increasing the reliability of the model, in addition to shortening the modeling time.

In case an artificial intelligence tool is used for organizing the sub-collections, for example in step 1003, the process described with Figure 8 may include retraining the artificial intelligence tool. The retraining may also be triggered as a part of the process described with Figure 9, or after the process described with Figure 9.

Figures 11 to 13 illustrate non-limiting examples of workflows when an artificial intelligence based tool is used. In the examples, the artificial intelligence based tool comprises per a sub-collection a trained classifier that may be retrained, the classifier being attached to the sub-collection. It is a straightforward process for a person skilled in the art to apply the examples with a shared, or common, classifier of two or more sub-collections. For example, a multiclass classifier with N target classes may be used for N sub-collections. The classifier may be based on the single-pass algorithm that only classifies new data based on the earlier sub-collections (groups), or clusters, without making changes to previously classified data. The trained classifier of a sub-collection may be configured to form, using a predefined default features for the sub-collection, a feature matrix for the sub-collection from all sets in the sub-collection. The predefined default features may be predefined from a feature space using a feature selection method, such as the wrapper-method. The classifier may be a distance-based classifier, which calculates the distance-based similarity of a new set (a set to be stored) and a centroid point of the sub-collection the classifier is attached to. The distance-based similarity calculations may be based on Gower's distance similarity or Jaccard similarity, for example.

In the illustrated example of Figure 11, it is assumed, for the sake of clarity of description, that one set of model objects is to be stored to the collection. It is a straightforward task for one skilled in the art to implement the example, when a plurality of sets is to be stored. Further, in the illustrated example it is assumed that the collection comprises three sub-collections, s-c1, s-c2, S-c3 with corresponding classifiers cl1, cl2, cl3, each having corresponding feature matrices (feat.), a sub-collection comprising one or more existing sets (exist.).

Referring to Figure 11, when a new set is to be stored, for example based on user input requesting storing, or user input indicating that the set has been finalized, all sub-collections are iterated for the new set. A classifier calculates a similarity score of metadata (feature data) of the new set and its own feature matrix, and the new set will be automatically assigned, by a database operation (DB oper.) to the most similar sub-collection, based on similarity scores calculated. The higher the similarity score, the bigger is the number of sets in the sub-collection that are similar to the new set. In the illustrated example of Figure 11, the new set is assigned to s-c3, since its similarity score 0.8 is the highest one. When an existing sub-collection is found, the attached classifier will perform a feature update resulting that features (metadata, or at least part of the metadata) of the new set are added to the feature matrix. In the example of Figure 11, the feature matrix of the classifier cl3 is updated to comprise, in addition to already existing features, also new features from metadata of the new set. In some implementations, if all similarity scores are below a threshold, for example 0.05, a new sub-collection may be created (generated). In case a new sub-collection is created, a new classifier (copy of an initial classifier) may be attached to it, and the new classifier will generate a feature matrix using the features (metadata) of the new set. In implementations using the multiclass classifier for N classes, for example, the multiclass classifier may be retrained to be a multiclass classifier for N+1 classes.

Thus, the expected classification result is that the system will automatically assign new sets to the most similar sub-collection.

Same rules may be applied when sets are sorted to a suitability order, i.e. first the most suitable sub-collection (the highest similarity score) is determined, and then the sets in the sub-collection are sorted, the most suitable set being the best prediction of the users intent how to increase detail.

As described above, a user may change a set, or a plurality of sets from a sub-collection to another sub-collection, or the user may create a new sub-collection. In some implementations, this may trigger a retraining process, since it may indicate that the feature matrix may not be a correct one, according to the user's rules and preferences, for example. Retraining may occur automatically and continuously, resulting that, invisibly to a user, the feature matrices are updated, which improves the suitability sorting, and the following classification result should be better without affecting the modelling of the user. In other words, the retraining and updating may happen as a background process, improving the result (better prediction which is the most suitable set) the user not being aware of it.

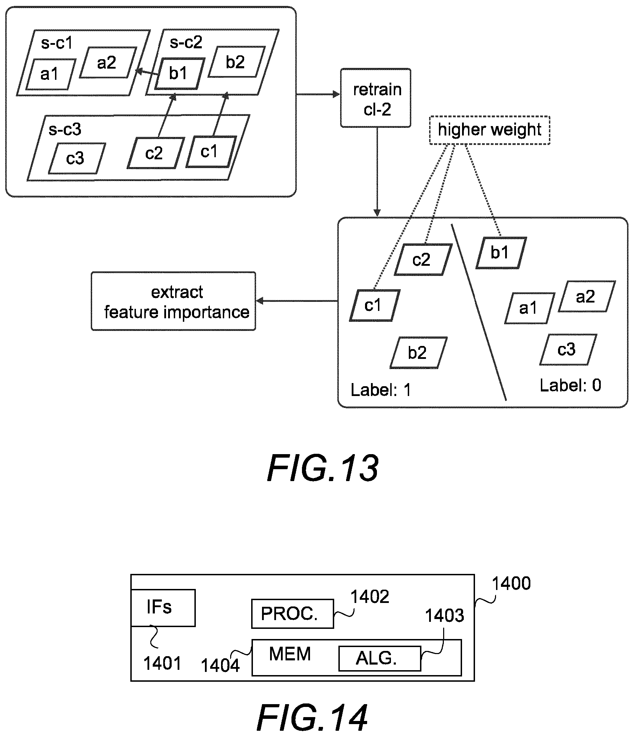

Figure 12 illustrates a non-limiting example of basic principles, or a concept, of a retraining that optimize the classification from the feature aspect, i.e. to have a feature matrix representing the features better than the current feature set, and Figure 13 illustrates a non-limiting example of a workflow of a user's move operation.

Referring to Figure 12, when a user input causing that a set is removed (rem.set) from a sub-collection s-c2 and inserted (ins.set) to a sub-collection s-c1, i.e. the set is moved from the s-c2 to the s-c1, the two sub-collections are regarded as two classes and both classifiers are trained, for example by solving a supervised feature selection problem, and the thus obtained features may be added (merged) to the default features to obtain reselected features (feature matrix) for the classifier. By merging the features with the default features ensures that earlier knowledge will not be discarded.

A non-limiting example of the retraining workflow is shown in Figure 13. In the example of Figure 13, a user input indicates that sets "b 1", "c1" and "c2" are misclassified to wrong sub-collections. Based on the user input, the sets "c1" and "c2" are moved from the sub-collection s-c3 to their correct sub-collection s-c2 and the set "b1" is moved from the sub-collection s-c2 to its correct sub-collection s-c1. For the sub-collection s-c2, the retraining process of its classifier cl2 will be triggered, and a classification model with the target label will be set up automatically. In the illustrated example, all included sets in the sub-collection s-c2 are positive samples with label 1, and all sets in other sub-collection that have interacted with the sub-collection s-c2 are negative examples labeled 0. The label values used reflect all origin sub-collection contents as negative and all destination sub-collection contents as positive. Further, the moved sets may be given a higher weight to highlight user modifications' value to the system during the retraining process. The weight for the original set may be 1, and the weights for the moved sets may be 1.5. For example, using the random forest classifier model, different sample weights may be set easily using a sample weight parameter. The classifier cl2 is then trained to distinguish these two classes, and feature importance is extracted to find the features to be added to the default set of features.

For a merged sub-collection, formed by merging two or more sub-collections, the centroid of all sets may be first computed, then for each feature, the average distance from all sets to the centroid may be calculated. Among them, the feature with the closest average distance may be considered more important. In other words, if all sets have a feature with the same value, this feature may be interpreted to be a critical feature and can represent these sets.

As can be seen from the above examples, especially from examples of Figures 11 to 13, the contents of the collection (library) may be the result of machine learning based modeling where each entry inside a sub-collection (a sub-library, or a specific library) is an instance of a user label (a user designation). The instance, called above a set, inside the sub-collection may contain a vast amount of objects and other information but is still considered to be a representation of the given label. With the help of user labeling, a classification model, in which sub-collections define classes, and which model is based on user input labels applied to different instances according to the user input, for example a label being applied to a set of instances and the label not being applied to another set of instances, and feature space, can be formed. In other words, the collection may be a result of classification by the user setting instances into classes (sub-collections).

The content of the collection may also be a result of clustering, for example, without knowing the labels in the given content. This may occur in situations where there is not sufficient amount of user labeled information available to generate a classifier (a classification model), or there is no user labeled information available. The sufficient amount may be due to a number of different labels in use, either there are too many different labels, or not enough different labels, to form a suitable partition of the content into sub-collections that represent consistent products, reviewable by users. In such situations, the collection with sub-collections may be created using unsupervised machine learning based methods, such as clustering. After the clusters (sub-collections) have been created, the user can perform modifications to the clusters, and after user modifications the cluster may be classified as the representation of the given label. In the case of clustering, entries in a sub-collection represent unlabeled instances that are considered similar based on a machine learning approach that utilizes feature space of instances without the help of known labels.

Still a further possibility includes that a user performs manual classification by pinpointing, for example, a label or labels, among available features, that have been obtained as a result of automatic classification of a supervised machine learning algorithm, which has been trained on an initial set of classified contents, for example, or an unsupervised machine learning algorithm, or their combination. In this case a piece of content in the collection represents an instance of a class label. For example, initial sets of the content may be automatically classified by clustering to sub-collections, a user may then move one or more sets to new sub-collections, or a new sub-collection, and the thus amended classification will be applied to sets that will be added to the collection after that. In another implementation, initial sub-collections (classes) may be defined by a user labeling one or more features, or properties, in initial content comprising a subset of the initial sets, and then other sets are automatically classified to sub-collections based on the initial sub-collections.

It should be appreciated that the machine-learning based tools may be trained, i.e. models updated, when new sets are added to the collection, or user modifies the contents of sub-libraries.

In a summary, content in the collection, i.e. the collection sets, is obtained (created) using model content of a plurality of models that have been modelled earlier. In some implementations, anything can be stored to the collection, the most suitable set will have more details, whereas in some implementations the content may comprise copies of model content allowed to be stored to the collection since level of detail requirements for model content to be stored to the collection are fulfilled. In an implementation, a model set which copy is stored to the library, will be treated by the modeling application as a final model set, which modification is not any more possible. In other words, the contents in the collection may be updated by users storing to the collection copies of what they have modeled. A collection set is a set of model objects representing at least one, typically a plurality, of pieces for construction products, preferably modeled with a specific level of detail, and being stored with metadata of the set of model objects modeled to the collection, in addition it being stored to the model.

The steps and related functions described above using Figures 1 to 13 are in no absolute chronological order, and some of the steps may be performed simultaneously or in an order differing from the given one. Other functions can also be executed between the steps or within the steps. Some of the steps or part of the steps can also be left out or replaced by a corresponding step or part of the step.

The techniques described herein may be implemented by various means so that an apparatus implementing one or more functions/operations described above with an embodiment/example, for example by means of any of Figures 1 to 13 and any combination thereof, comprises not only prior art means, but also means for implementing the one or more functions/operations of a corresponding functionality described with an embodiment, for example by means of any of Figures 1 to 13 and any combination thereof, and it may comprise separate means for each separate function/operation, or means may be configured to perform two or more functions/operations. For example, one or more of the means and/or the detail increasing unit, or any corresponding unit/subunit(s), for one or more functions/operations described above may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For a firmware or software, implementation can be through modules (e.g., procedures, functions, and so on) that perform the functions described herein.

Figure 14 is a simplified block diagram illustrating some units for an apparatus 1400 comprising the detail increasing unit, or any corresponding unit/subunit(s), or configured otherwise to perform at least some functionality described above, for example by means of any of Figures 1 to 13 and any combination thereof, or some of the functionalities if functionalities are distributed in the future. In the illustrated example, the apparatus comprises one or more interface (IF) entities 1401, such as one or more user interfaces and one or more communication interfaces, one or more processing entities 1402 connected to various interface entities 1401 and to one or more memories 1404.

The one or more interface entities 1401 are entities for receiving and transmitting information, such as communication interfaces comprising hardware and/or software for realizing communication connectivity according to one or more communication protocols, or for realizing data storing and fetching (obtaining, retrieving), or for providing user interaction via one or more user interfaces. The one or more user interfaces may be any kind of a user interface, for example a screen, a keypad, or an integrated display device or external display device.

A processing entity 1402 is capable to perform calculations and configured to implement at least the detail increasing unit, or any corresponding unit/subunit(s), described herein, or at least part of functionalities/operations described above, for example by means of any of Figures 1 to 13 and any combination thereof, as a corresponding unit or a sub-unit if distributed scenario is implemented, with corresponding algorithms 1403 stored in the memory 1404. The entity 1402 may include a processor, controller, control unit, micro-controller, unit, module, etc. suitable for carrying out embodiments or operations described above, for example by means of any of Figures 1 to 13 and any combination thereof. Generally the processor is a central processing unit, but the processor may be an additional operation processor.

A memory 1404 is usable for storing a computer program code required for the detail increasing unit, or any corresponding unit/subunit(s), or for one or more functionalities/operations described above, for example by means of any of Figures 1 to 13 and any combination thereof, i.e. the algorithms for implementing the functionality/operations described above by means of any of Figures 1 to 13 and any combination thereof. The memory 1404 may also be usable for storing other possible information, like technical documents.

The algorithms 1403 are software code, i.e. instructions, forming at least one portion of a computer program. The computer program may be in source code form, object code form, or in some intermediate form, and it may be stored in some sort of carrier, which may be any entity or device capable of carrying the program. For example, the computer program may be stored on a computer program distribution medium readable by a computing device or a processor. The computer program medium may be, for example but not limited to, an electrical carrier signal, software distribution package, or a non-transitory medium, for example. Coding of software for carrying out the embodiments as shown and described is well within the scope of a person of ordinary skill in the art.

As a summary, the detail increasing unit, or any corresponding unit/subunit(s), and/or algorithms for functions/operations described herein, for example by means of means of any of Figures 1 to 13 and any combination thereof, may be configured as a computer or a processor, or a microprocessor, such as a single-chip computer element, or as a chipset, or one or more logic gates including at least a memory for providing storage area used for arithmetic operation and an operation processor for executing the arithmetic operation. The detail increasing unit, or any corresponding unit/subunit(s), and/or algorithms for functions/operations described above, for example by means of means of any of Figures 1 to 13 and any combination thereof, may comprise one or more computer processors, application-specific integrated circuits (ASIC), digital signal processors (DSP), digital signal processing devices (DSPD), programmable logic devices (PLD), field-programmable gate arrays (FPGA), graphics processing units (GPU), and/or other hardware components that have been programmed and/or will be programmed by downloading computer program code (one or more algorithms) in such a way to carry out one or more functions of one or more embodiments/examples.

An embodiment provides a computer program embodied on any client-readable distribution/data storage medium or memory unit(s) or article(s) of manufacture, comprising program instructions executable by one or more processors/computers, which instructions, when loaded into an apparatus, constitute the detail increasing unit, or any corresponding unit/subunit(s), or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the units/sub-units and/or the algorithms for one or more functions/operations described above, for example by means of means of any of Figures 1 to 13 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

Aspects and features of the present disclosure are set forth in the following numbered clauses which contain the subject matter of the claims of the parent application as filed:
1. A computer implemented method comprising:
   processing (201, 401), by a modeling application running in a computing device, a model for a construction product, the model comprising at least a plurality of sets of model objects, wherein a set of model objects represents one or more pieces belonging to the construction product;
   displaying (202, 402) a model view rendering at least some of the plurality of sets of model objects;
   characterised by
   detecting (203, 403) a user input requesting to increase level of detail relating to at least one set of the plurality of sets of model objects, said at least one set of model objects being selected by a user;
   in response to said user input, performing following per a set of model objects selected (204):
      determining (205, 404) content of a first metadata, the first metadata comprising information indicating at least a type and geometry of the set of model objects;
      sorting (206, 407) collection sets in a collection, which comprises a plurality of collection sets with details in metadata, the collection sets being created using model content of a plurality of models that have been modelled earlier, to a suitability order based on compatibility of the first metadata to metadata of the collection sets, wherein a collection set is a set of model objects representing one or more pieces for construction products and being stored with its metadata to the collection;
      in response to finding one or more suitable collection sets and receiving (209, 413) a user input indicating approval of the most suitable collection set, increasing (210, 414) the level of detail of the set of model objects to the level of detail defined by the details of the most suitable collection set by adding to the first metadata copies of one or more details in the metadata of the most suitable collection set that are not comprised in the first metadata; and
      displaying (211) the set of model objects with increased level of detail to the user.
2. The computer implemented method of clause 1, further comprising at least one of:
   adjusting (414), when adding a copy of a detail to the first metadata, the detail added to be in accordance with details already existing in the first metadata;
   updating (503), in response to a user input (502) indicating to modify at least a portion of the content of the first metadata determined, one or more details in said portion to correspond to one or more details in the metadata of the most suitable collection set.
3. The computer implemented method of clause 1 or 2, further comprising, prior to adding details to the first metadata:
   displaying (408) at least the most suitable collection set to a user;
   in response to receiving a user input indicating a preview (409), applying (410) metadata of the most suitable collection set to the set of model objects and displaying (410) a result of the applying as the preview.
4. The computer implemented method of clause 1, 2 or 3, further comprising:
   receiving (416) a user input changing one or more details added to the first metadata; and
   updating (417) the first metadata correspondingly.
5. The computer implemented method of any preceding clause, further comprising
   propagating (417), in response to the set of model objects being connected to one or more further sets of model objects prior to increasing the level of detail and/or after the increasing the level of detail, changes caused by the increasing the level of detail to the one or more further sets of model objects.
6. The computer implemented method of any preceding clause, further comprising:
   displaying (408) a list comprising the collection sets in the sorted order;
   in response to receiving a user input selecting another collection set (411), changing (412) the collection set selected to be the most suitable collection set.
7. The computer implemented method of any preceding clause, wherein a collection set is a set of model objects with at least fabrication level of detail, which contains accurate details enabling a fabrication of corresponding one or more pieces.
8. The computer implemented method of any preceding clause, wherein the collection comprises a plurality of sub-collections to which the plurality of collection sets are allocated based on their metadata and features of sub-collections, and the method further comprises, prior to said sorting:
   selecting (901), based on the first metadata and the features, one sub-collection;
   performing the sorting to the suitability order within collection sets in said sub-collection.
9. The computer implemented method of clause 8, wherein at least some of the sub-collections have access rights, and the method further comprises:
   selecting (303) the sub-collection amongst sub-collections the user has access rights (302).
10. The computer implemented method of clause 8 or 9, further comprising:
   displaying (902) the collection sets in said sub-collection and at least one other sub-collection with sub-collection features;
   detecting (903) a user input moving one or more of the collection sets to one of the at least one other sub-collection; and
   updating (904) sub-collections correspondingly.
11. The computer implemented method of clause 8, 9 or 10, further comprising:
   receiving (1002) a user input storing the at least one set of model objects with increased level of detail;
   determining (1003), based on the features and the first metadata, per a set of model objects of the at least one set of model objects with increased level of detail, a sub-collection whereto allocate the set of model objects;
   storing (1004) the at least one set of model objects as corresponding at least one collection set to corresponding one or more sub-collections.
12. The computer implemented method of any preceding clause, further comprising, in response to no collection set being found (406), displaying (407) corresponding information.
13. The computer implemented method of any preceding clause, wherein the user input indicating approval of the most suitable collection set is received in the user input requesting to increase level of detail.
14. A computer program comprising instructions which, when the program is run by a computer, cause the computer to carry out at least the method of any of clauses 1 to 13.
15. An apparatus (110, 1400) comprising means (111, 112, 1401, 1402, 1403, 1404) for carrying out at least the method of any of clauses 1 to 13.

## Claims

1. A computer implemented method comprising:
receiving a first user input indicating a request to store a new set of model objects to a collection, wherein the collection comprises a plurality of sub-collections and each sub-collection is attached to a sub-collection classifier;
calculating, by one or more sub-collection classifiers attached to the plurality of sub-collections, a first plurality of similarity scores, each similarity score of the first plurality associated with a sub-collection of the plurality of sub-collections and the new set of model objects;
determining a first sub-collection of the plurality of sub-collections associated with the highest similarity score of the plurality of similarity scores;
assigning the new set of model objects to the first sub-collection;
retraining a first sub-collection classifier of the one or more sub-collection classifiers based on the new set of model objects, wherein the first sub-collection classifier is attached to first sub-collection;
detecting a second user input requesting to increase level of detail relating to a target set of model objects of a model for a construction project;
calculating, by the one or more sub-collection classifiers attached to the plurality of sub-collections, a second plurality of similarity scores, each similarity score of the second plurality associated with a sub-collection of the plurality of sub-collections and the target set of model objects;
identifying, based on the second plurality of similarity scores, a second sub-collection of the plurality of sub-collections to be the most similar sub-collection;
increasing the level of detail of the target set of model objects to the level of detail defined by the second sub-collection by adding copied feature data to the target set of model objects, wherein the copied feature data comprises copies of details comprised in feature data associated with the second sub-collection that were not comprised in feature data associated with the target set of model objects.

2. The method of claim 1 identifying, based on the second plurality of similarity scores, the second sub-collection of the plurality of sub-collections to be the most similar sub-collection comprises:
sorting the plurality of sub-collections based on the second plurality of similarity scores; and,
receiving a user input indicating approval of the second sub-collection.

3. The method of claim 1 or claim 2 further comprising:
determining whether each similarity scores of the plurality of similarity scores calculated by the one or more sub-collection classifiers is below a threshold score;
in response to determining each similarity score of the plurality of similarity scores is below the threshold score:
generating a new sub-collection attached to a new sub-collection classifier of the one or more sub-collection classifiers;
assigning the new set of model objects to the new sub-collection;
retraining the new sub-collection classifier based on the new set of model objects;
wherein determining the first sub-collection of the plurality of sub-collections associated with the highest similarity score of the plurality of similarity scores, assigning the new set of mode object to the first sub-collection and retraining the first sub-collection classifier of the one or more sub-collection classifiers based on the new set of model objects, are performed in response to determining at least one similarity score of the plurality of similarity scores is above or equal to a threshold score.

4. The method of any of claims 1-3 wherein calculating, by the one or more sub-collection classifiers attached to the plurality of sub-collections, the first plurality of similarity scores and/or the second plurality of similarity scores further comprises:
calculating each similarity score based on feature data associated with the new set of model objects and a feature matrix for the sub-collection associated with the respective similarity score.

5. The method of claim 4, wherein the one or more sub-collection classifiers are distance-based classifiers and wherein calculating each similarity score comprises:
calculating a distance-based similarity score based on the new set of model objects and a centroid point of the sub-collection associated with the respective similarity score; and optionally,
wherein calculating a distance-based similarity score comprises calculating a Gower's distance similarity score or a Jaccard similarity score.

6. The method of any of claims 4-5 wherein each sub-collection classifier of the one or more sub-collection classifiers is configured to form, using one or more predefined default features for the sub-collection attached to the respective sub-collection classifier, the feature matrix for the sub-collection based on one or more sets of model objects in the sub-collection

7. The method of claim 6 wherein the predefined default features may be predefined from a feature space using a feature selection method; and optionally,
wherein the feature selection method is the wrapper-method.

8. The method of claims 4-7, wherein retraining the first sub-collection classifier and/or retraining the new sub-collection classifier further comprises:
performing a feature update such that at least part of the feature data associated with the new set of model objects is added and/or merged to the feature matrix for the sub-collection the new set of model objects is assigned to.

9. The method of any preceding claim wherein generating a new sub-collection attached to a new sub-collection classifier of the one or more sub-collection classifiers comprises:
generating the new sub-collection classifier by making a copy of a predetermined initial classifier;
attaching the new sub-collection classifier to the new sub-collection;
generating a feature matrix for the new sub-collection based on the feature data of the new set of model objects.

10. The method of any preceding claim wherein the one or more sub-collection classifiers are implemented by a multiclass classifier with N classes; and,
wherein generating a new sub-collection attached to a new sub-collection classifier of the one or more sub-collection classifiers comprises retraining the multiclass classifier to be a multiclass classifier with N+1 classes comprising a class corresponding to the new sub-collection classifier; and,
wherein retraining the first sub-collection classifier and/or retraining the new sub-collection classifier further comprises retraining one or more classes of the multiclass classifier, wherein each of the one or more classes correspond to the first sub-collection and first subcollection classifier and/or the new sub-collection and new sub-collection classifier.

11. The method of any preceding claim further comprising dynamically retraining at least one sub-collection classifier of the one or more sub-collection classifiers based on any user changes to at least one sub-collection of the plurality of sub-collections; and optionally,
wherein the user changes to at least one sub-collection of the plurality of sub-collections can comprise one or more of:
moving a selected set of model objects from an initial sub-collection of the one or more sub-collections, to an adjusted sub-collection of the one or more sub collections;
deleting the selected set of model objects from the initial sub-collection;
inserting the selected of model objects to the adjusted sub-collection.

12. The method of claim 11 wherein moving the set of model objects from the initial sub-collection of the one or more sub-collections, to the adjusted sub-collection of the one or more sub collections comprises:
deleting a selected set of model objects from the initial sub-collection;
inserting the selected set of model objects to the adjusted sub-collection.

13. The method of claim 11 or claim 12 wherein dynamically at least one sub-collection classifier of the one or more sub-collection classifiers based on deleting the selected set of model objects from the initial sub-collection comprises:
retraining an initial sub-collection classifier of the one or more sub-collection classifiers using the feature data of the selected set of model objects as negative training examples, wherein the initial sub-collection classifier is attached to the initial sub-collection; and/or,
wherein dynamically retraining at least one sub-collection classifier of the one or more sub-collection classifiers based on assigning the selected set of model objects to the adjusted sub-collection comprises:
retraining an adjusted sub-collection classifier of the one or more sub-collection classifiers using the feature data of the selected set of model objects as positive training examples, wherein the adjusted sub-collection classifier is attached to the adjusted sub-collection; and optionally,
wherein retraining an adjusted sub-collection classifier of the one or more sub-collection classifiers using the feature data of the selected set of model objects as positive training examples further comprises assigning a higher weight to the selected set of model objects.

14. A computer program comprising instructions which, when the program is run by a computer, cause the computer to carry out at least the method of any of claims 1 to 13.

15. An apparatus comprising means for carrying out at least the method of any of claims 1 to 13.
